# EUROPEAN PATENT APPLICATION

(11) **EP 4 474 344 A1**
(43) Date of publication of application: **11.12.2024**
(21) Application number: 23749721.9
(22) Date of filing: 30.01.2023
(51) Int. Cl.: C01B 17/22, C01B 25/14, C03B 5/193, C03C 3/32, H01B 1/06, H01B 1/10, H01B 13/00, H01M 10/0562

(54) **METHOD FOR PRODUCING SUBSTANCE CONTAINING ALKALI METAL ELEMENT AND SULFUR ELEMENT**

(30) Priority: 02.02.2022 JP 2022015190
(71) Applicant: AGC INC., Chiyoda-ku, Tokyo 1008405 (JP)
(72) Inventor: FUJII, Naoki, Tokyo 100-8405 (JP)
(74) Representative: Müller-Boré & Partner Patentanwälte PartG mbB
(86) International application number: PCT/JP2023/002934
(87) International publication number: WO 2023/149405

(57) **Abstract**

The present invention pertains to a method for producing a substance containing an alkali metal element and a sulfur element, wherein a raw material containing the alkali metal element and the sulfur element is placed in a porous container and heated and melted to obtain a melt, and the melt is stirred by an inert gas supplied from the outside of the porous container.

## Description

### TECHNICAL FIELD

The present invention relates to a method for producing a substance containing an alkali metal element and a sulfur element, and particularly relates to a method for producing a sulfide-based solid electrolyte containing a lithium element.

### BACKGROUND ART

Lithium-ion secondary batteries are widely used in portable electronic devices such as mobile phones and notebook computers. In the related art, a liquid electrolyte has been used in a lithium-ion secondary battery, but there is a concern of liquid leakage, ignition, and the like, and it has been necessary to increase the size of a case for safety design. It has also been desired to improve the shortage of battery life and the narrow operating temperature range.

In this regard, attention has been paid to an all-solid-state lithium-ion secondary battery in which a solid electrolyte is used as an electrolyte of a lithium-ion secondary battery, from the viewpoint of improving safety, charging and discharging at a high speed, and reducing the size of the case. Known methods for producing a solid electrolyte include a sealed glass tube method, a mechanical milling method, a melting method, and the like, and among these methods, the melting method is widely used as a method that allows for mass production.

For example, Patent Literature 1 discloses a method for producing a lithium-ion conductive material, including melting and vitrifying a composite compound containing lithium, phosphorus, and sulfur as a composition, and obtaining a sulfide glass by rapidly cooling the molten glass.

Patent Literature 2 discloses a method for producing a sulfide-based lithium-ion conductive solid electrolyte, including mixing each constituent compound of the sulfide-based lithium-ion conductive solid electrolyte and heating and melting the mixture under an excess of sulfur.

### CITATION LIST

### PATENT LITERATURE

Patent Literature 1: JP2012-043654A
Patent Literature 2: JPH06-115911A

### SUMMARY OF INVENTION

### TECHNICAL PROBLEM

A raw material used in production of a sulfide-based solid electrolyte contains sulfur, but since sulfur is easily volatilized, if sulfur volatilizes during heating and melting of the raw material, a composition of the resulting sulfide-based solid electrolyte may be uneven. Therefore, when producing a sulfide-based solid electrolyte by the melting method, it is necessary to prevent the composition from being uneven due to the volatilization of sulfur in the raw material by melting the raw material in a sealed or volatilization-prevention system. However, in the above-mentioned sealed or volatilization-prevention system, it is difficult to mechanically stir a melt, and methods for stirring a melt are limited.

When synthesizing a large amount of the sulfide-based solid electrolyte, the apparatus must be enlarged, and it is difficult to stir the melt with the apparatus using a rocking furnace or the like, making it difficult to stir and homogenize the melt of the raw material.

Therefore, an object of the present invention is to provide a method for producing a substance containing an alkali metal element and a sulfur element with excellent homogeneity, even when a raw material containing a highly volatile sulfur element is used.

### SOLUTION TO PROBLEM

As a result of intensive studies, inventors of the present invention found a method in which a raw material containing an alkali metal element and a sulfur element is placed in a porous container, heated and melted to obtain a melt, and the melt is stirred by an inert gas flowed to the outside of the porous container. It was found that according to such a method, the occurrence of unevenness in the composition due to the volatilization of sulfur in the raw material can be prevented, and it is possible to produce a substance containing an alkali metal element and a sulfur element with excellent homogeneity, thereby completing the present invention.

That is, the present invention relates to the following [1] to [10].
[1] A method for producing a substance containing an alkali metal element and a sulfur element, in which a raw material containing the alkali metal element and the sulfur element is placed in a porous container and heated and melted to obtain a melt, and the melt is stirred by an inert gas flowed to the outside of the porous container.
[2] The method according to the above [1], in which the alkali metal element is a lithium element, and the substance containing the alkali metal element and the sulfur element is a sulfide-based solid electrolyte containing the lithium element.
[3] The method according to the above [1] or [2], in which the raw material further contains a phosphorus element.
[4] The method according to any one of the above [1] to [3], in which a contact angle between the porous container and the melt is 30° or more.
[5] The method according to any one of the above [1] to [4], in which the porous container has an open porosity of 5% or more.
[6] The method according to any one of the above [1] to [5], in which the porous container contains carbon.
[7] The method according to the above [6], in which the carbon has a bulk density of 1.6 g/cm³ to 2.0 g/cm³.
[8] The method according to any one of the above [1] to [7], in which an aspect ratio, which is a ratio between a height of the porous container and a length of a major axis in a two-dimensional projected image of the porous container projected from above, is 1 or less.
[9] The method according to any one of the above [1] to [8], in which the porous container is connected to another container to form a connected container body, and an aspect ratio, which is a ratio between a height of the connected container body and a length of a major axis in a two-dimensional projected image of the connected container body projected from above, is 1 or less.
[10] The method according to any one of the above [1] to [9], in which the outside of the porous container is surrounded by a non-porous casing.

### ADVANTAGEOUS EFFECTS OF INVENTION

According to one aspect of the present invention, a raw material containing an alkali metal element and a sulfur element is placed in a porous container and heated and melted to obtain a melt, and an inert gas flowed to outside of the porous container flows into the container through pores of the porous container, so that the melt is stirred. Therefore, even when a raw material containing a highly volatile sulfur element is used, it is possible to perform heating and melting and stirring in a sealed or volatilization-prevention system, and a substance containing an alkali metal element and a sulfur element with excellent homogeneity can be produced.

Since the melt is stirred using an inert gas, there is no need to use large machinery, and even in the case where mechanical stirring is difficult, such as in a sealed or volatilization-prevention system, it is possible to synthesize a large amount of the substance containing the alkali metal element and the sulfur element.

### BRIEF DESCRIPTION OF DRAWINGS

FIG. 1 is a schematic diagram showing a production method according to one embodiment of the present invention.
FIG. 2A and FIG. 2B are schematic diagrams for explaining an aspect ratio of a porous container (rectangular parallelepiped).
FIG. 3A and FIG. 3B are schematic diagrams for explaining an aspect ratio of a porous container (cylindrical).
FIG. 4A and FIG. 4B are schematic diagrams for explaining an aspect ratio of a connected container body formed by connecting a plurality of containers.

### DESCRIPTION OF EMBODIMENTS

Hereinafter, the present invention is described in detail, but the present invention is not limited to the following embodiment and can be freely modified and implemented without departing from the gist of the present invention. In addition, "to" indicating a numerical range is used to include numerical values written before and after it as a lower limit value and an upper limit value.

A method (hereinafter, sometimes referred to as the present production method) for producing a substance containing an alkali metal element and a sulfur element (hereinafter, sometimes referred to as the present substance) according to the embodiment of the present invention is characterized in that a raw material containing the alkali metal element and the sulfur element is placed in a porous container and heated and melted to obtain a melt, and the melt is stirred by an inert gas flowed to outside of the porous container.

### (Raw Material)

The raw material used in the present production method (hereinafter also referred to as the present raw material or simply as the raw material) contains an alkali metal element (R) and a sulfur element (S).

Examples of the alkali metal element (R) include lithium element (Li), sodium element (Na), and potassium element (K), and among these elements, the lithium element (Li) is preferable.

As the alkali metal element (R), substances (components) containing an alkali metal element such as elemental alkali metal element and compounds containing an alkali metal element can be appropriately combined and used. Here, as the lithium element, Li-containing substances (components), such as elemental Li and Li-containing compounds, can be appropriately combined and used.

Examples of a substance containing the lithium element (Li) include lithium compounds such as lithium sulfide (Li₂S), lithium iodide (LiI), lithium carbonate (Li₂CO₃), lithium sulfate (Li₂SO₄), lithium oxide (Li₂O), and lithium hydroxide (LiOH), and metallic lithium. As the substance containing the lithium element (Li), from the viewpoint of obtaining a sulfide material, it is preferable to use lithium sulfide.

As the sulfur element (S), S-containing substances (components), such as elemental S and S-containing compounds, can be appropriately combined and used.

Examples of a substance containing the sulfur element (S) include phosphorus sulfides such as phosphorus trisulfide (P₂S₃) and phosphorus pentasulfide (P₂S₅), other sulfur compounds containing phosphorus, elemental sulfur, and a compound containing sulfur. Examples of the compound containing sulfur include H₂S, CS₂, iron sulfides (FeS, Fe₂S₃, FeS₂, Fe₁₋ₓS, or the like), bismuth sulfide (Bi₂S₃), and copper sulfides (CuS, Cu₂S, Cu₁₋ₓS, or the like). From the viewpoint of obtaining a sulfide material, the substance containing the sulfur element (S) is preferably phosphorus sulfide, and more preferably phosphorus pentasulfide (P₂S₅). These substances may be used alone or in combination of two or more kinds thereof. Note that phosphorus sulfide can be considered as a compound that serves as both the S-containing substance and a P-containing substance, which is described later.

From the viewpoint of improving an ionic conductivity and the like of the resulting present substance, it is preferable that the present raw material further contains the phosphorus element (P). As the phosphorus element, P-containing substances (components), such as elemental P and P-containing compounds, can be appropriately combined and used.

Examples of a substance containing the phosphorus element (P) include phosphorus sulfides such as phosphorus trisulfide (P₂S₃) and phosphorus pentasulfide (P₂S₅), phosphorus compounds such as sodium phosphate (Na₃PO₄), and elemental phosphorus. As the substance containing the phosphorus element (P), from the viewpoint of exerting the effect of the present invention more effectively, phosphorus sulfide having high volatility is preferable, and phosphorus pentasulfide (P₂S₅) is more preferable. These substances may be used alone or in combination of two or more kinds thereof.

The present raw material can be obtained by appropriately mixing, for example, the above-mentioned substances depending on the composition of the desired present substance. A mixing ratio is not particularly limited, but for example, a molar ratio S/R of the sulfur element (S) to the alkali metal element (R) in the raw material is preferably 0.25/0.75 or more, and more preferably 0.3/0.7 or more, from the viewpoint of improving the ionic conductivity and the like of the resulting present substance.

Examples of a preferred combination of the alkali metal element and the sulfur element contained in the present raw material include a combination of Li₂S and P₂S₅. When Li₂S and P₂S₅ are combined, a molar ratio Li/P of Li to P is preferably from 40/60 to 88/12, and more preferably from 50/50 to 88/12. By adjusting the mixing ratio so that the amount of P₂S₅ is relatively smaller than Li₂S, it becomes easier to prevent volatilization of sulfur and phosphorus components during heating treatment due to a smaller boiling point of P₂S₅ compared to a melting point of Li₂S.

On the other hand, since lithium sulfide is expensive, a lithium compound other than lithium sulfide, metallic lithium, or the like may be used from the viewpoint of reducing a production cost of the sulfide-based solid electrolyte. Specifically, in this case, the raw material preferably contains one or more selected from the group consisting of metallic lithium, lithium iodide (LiI), lithium carbonate (Li₂CO₃), lithium sulfate (Li₂SO₄), lithium oxide (Li₂O), and lithium hydroxide (LiOH) as the Li-containing substance. These substances may be used alone or in combination of two or more kinds thereof.

The present raw material may contain further substances (compounds and the like) in addition to the above substances depending on the composition of the desired present substance or as additives or the like.

For example, when producing the present substance containing a halogen element such as F, Cl, Br or I, the raw material preferably contains a halogen element (Ha). In this case, the raw material preferably contains a compound containing a halogen element. Examples of the compound containing a halogen element include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides. As the compound containing a halogen element, lithium halides are preferable, and LiCl, LiBr, and LiI are more preferable, from the viewpoint of reactivity of the raw material. These compounds may be used alone or in combination of two or more kinds thereof.

Note that an alkali metal halide such as lithium halide is also a compound containing an alkali metal element such as Li. When the raw material contains an alkali metal halide, a part or all of the alkali metal element such as Li in the raw material may be derived from the alkali metal halide such as lithium halide.

When the raw material contains a halogen element (Ha) and the phosphorus element (P), a molar equivalent of Ha relative to P in the raw material is preferably 0.2 molar equivalents or more, and more preferably 0.5 molar equivalents or more, from the viewpoint of improving the ionic conductivity and the like of the resulting present substance. From the viewpoint of stability of the resulting present substance, the molar equivalent of Ha is preferably 4 molar equivalents or less, and more preferably 3 molar equivalents or less.

From the viewpoint of improving a glass formation state of the resulting present substance, the raw material preferably contains sulfides such as SiS₂, B₂S₃, GeS₂, and Al₂S₃. By facilitating the glass formation, when glass is obtained by rapid cooling, glass can be obtained even when a cooling rate is reduced, thereby reducing a load on an apparatus.

From the viewpoint of imparting moisture resistance to the present substance, it is also preferable that oxides such as SiO₂, B₂O₃, GeO₂, Al₂O₃, P₂O₅ are contained. These compounds may be used alone or in combination of two or more kinds thereof.

Note that these sulfides and oxides may be contained in the raw material, or may be added separately when the raw material is heated and melted. An addition amount of these sulfides and oxides is preferably 0.1 weight% or more, and more preferably 0.5 weight% or more with respect to a total amount of the raw material. The addition amount is preferably 50 weight% or less, and more preferably 40 weight% or less.

The raw material may also contain a compound that serves as a crystal nucleus, which is described later.

Even when the present substance is produced by melting and stirring a raw material containing a highly volatile compound, the present production method can prevent the composition from being uneven due to volatilization of the compound. Therefore, the present production method is particularly suitable for use when the present raw material contains a highly volatile compound. Examples of a highly volatile compound include LiI, B₂S₃, S, Se, Sb₂S₃, and P₂S₅.

### (Substance Containing Alkali Metal Element and Sulfur Element)

Examples of the substance containing an alkali metal element and a sulfur element (the present substance) obtained by the present production method include solid electrolytes, infrared transmitting materials, and low melting point sealing materials. The solid electrolyte may be, for example, a sulfide-based solid electrolyte. A form of the present substance is not particularly limited, and examples thereof include powders, flakes, and plates.

Note that in the following, the present production method is described with a focus on a sulfide-based solid electrolyte as the present substance, but the present substance obtained by the present production method is not limited to the sulfide-based solid electrolyte.

### <Sulfide-based Solid Electrolyte>

Examples of the sulfide-based solid electrolyte obtained by the present production method include a sulfide-based solid electrolyte containing the lithium element, for example, a sulfide-based solid electrolyte having an LGPS type crystal structure such as Li₁₀GeP₂S₁₂, a sulfide-based solid electrolyte having an argyrodite crystal structure such as Li₆PS₅Cl, Li_{5.4}PS_{4.4}Cl_{1.6}, and Li_{5.4}PS_{4.4}Cl_{0.8}Br_{0.8}, Li-P-S-Ha-based (Ha represents at least one element selected from the halogen elements) crystallized glass; and LPS crystallized glass such as Li₇P₃S₁₁.

Depending on the purpose, the sulfide-based solid electrolyte may be an amorphous sulfide-based solid electrolyte, a sulfide-based solid electrolyte having a specific crystal structure, or a sulfide-based solid electrolyte including a crystal phase and an amorphous phase.

In the case where the sulfide-based solid electrolyte contains a crystal phase, the crystal contained in the sulfide-based solid electrolyte is preferably an ion-conductive crystal. Specifically, the ion-conductive crystals are crystals having a lithium-ion conductivity of more than 10⁻⁴ S/cm, and more preferably more than 10⁻³ S/cm. The crystal phase is more preferably an argyrodite crystal phase from the viewpoint of lithium-ion conductivity.

As a sulfide-based solid electrolyte having excellent lithium-ion conductivity, a sulfide-based solid electrolyte having elements of Li-P-S-Ha is preferable, and it is more preferable that the sulfide-based solid electrolyte has a crystal phase. In the halogen element, the halogen element is preferably derived from one or more selected from the group consisting of lithium chloride, lithium bromide, and lithium iodide.

The obtained sulfide-based solid electrolyte can be identified by analyzing the crystal structure by X-ray diffraction (XRD) measurement, and analyzing the elemental composition using various methods such as ICP emission spectrometry, atomic absorption spectrometry, and ion chromatography. For example, P and S can be measured by ICP emission spectrometry, Li can be measured by atomic absorption spectrometry, and Ha can be measured by ion chromatography.

By performing the Raman spectrum measurement, homogeneity of the composition of the sulfide-based solid electrolyte can be evaluated. Specifically, samples obtained from the resulting sulfide-based solid electrolyte is subjected to the Raman spectrum measurement at any two or more points. Note that from the viewpoint of improving accuracy of the evaluation, the number of measurement points is preferably 8 or more, and more preferably 10 or more.

Preferable conditions for the Raman spectrum measurement when evaluating the composition homogeneity of a sulfide-based solid electrolyte include a spot diameter of 3 µm and the number of 10 of the measurement points. By setting the spot diameter to 3 µm, an analysis area in the Raman spectrum measurement becomes a size suitable for evaluating the homogeneity of the composition of the sulfide-based solid electrolyte at a micro level.

It is believed that the smaller the variation in the peak wavenumber (peak position) resulting from the structure of the sulfide-based solid electrolyte is, such as PS₄³⁻ in each measurement result, the more homogeneous the composition of the sulfide-based solid electrolyte is. Alternatively, it is believed that the smaller the variation in the full width at half maximum of the peaks resulting from the structure of the sulfide-based solid electrolyte is, the more homogeneous the composition of the sulfide-based solid electrolyte is.

It is preferable to confirm peaks derived from a P-S bond as the peaks derived from the structure of the sulfide-based solid electrolyte although it depends on the composition of the resulting sulfide-based solid electrolyte.

The position of the peak derived from the P-S bond varies depending on the composition system, but typically, the position is between 350 cm⁻¹ and 500 cm⁻¹. Hereinafter, in the present specification, the variation in peak position and the variation in full width at half maximum of the peak refer to those confirmed for the most intense peak among the peaks derived from the P-S bond.

The variation in peak position can be evaluated as follows. That is, when a standard deviation of the peak positions for each measurement point obtained by the Raman spectrum measurement is calculated and the variation in peak position is expressed as (peak position average value) ± (standard deviation), the standard deviation value is preferably within 2 cm⁻¹, more preferably within 1 cm⁻¹, and still more preferably within 0.5 cm⁻¹. Note that the peak position refers to a position of a peak top.

For example, when the sulfide-based solid electrolyte obtained by the present production method was subjected to the Raman spectrum measurement with a spot diameter of 3 µm and 10 measurement points, the standard deviation of the peak positions of the peaks derived from the P-S bond in a range of 350 cm⁻¹ to 500 cm⁻¹ for each measurement point is preferably within 2 cm⁻¹, more preferably within 1 cm⁻¹, and still more preferably within 0.5 cm⁻¹.

The variation in full width at half maximum of the peaks can be evaluated as follows. That is, the standard deviation of the full width at half maximum of the peaks for each measurement point obtained by the Raman spectrum measurement is calculated by determining the full width at half maximum of each peak and then calculating a standard deviation of the values. When the variation in full width at half maximum is expressed as (average value of full width at half maximum of peaks) ± (standard deviation), the standard deviation value is preferably within 2 cm⁻¹, and more preferably within 1.5 cm⁻¹. Note that the full width at half maximum of the peaks herein refers to a width at which half the peak intensity of the peaks derived from the P-S bond intersects with the peaks derived from the P-S bond when the Raman spectrum is plotted.

For example, when the sulfide-based solid electrolyte obtained by the present production method was subjected to the Raman spectrum measurement with a spot diameter of 3 µm and 10 measurement points, the standard deviation in full width at half maximum of the peaks derived from the P-S bond in a range of 350 cm⁻¹ to 500 cm⁻¹ for each measurement point is preferably within 2 cm⁻¹, and more preferably within 1.5 cm⁻¹.

The lithium-ion conductivity of the obtained sulfide-based solid electrolyte is preferably 1.0 × 10⁻⁴ S/cm, more preferably 5.0 × 10⁻⁴ S/cm, and still more preferably 1.0 × 10⁻³ S/cm from the viewpoint of improving the battery characteristics when used in a lithium-ion secondary battery.

### (Porous Container)

In the present production method, the present raw material is placed in a porous container and then heated and melted. In the present production method, by using the porous container, an inert gas is flowed to the outside of the porous container, so that the inert gas passes through pores of the porous container and flows into the porous container, thereby stirring the melt. Therefore, even when a raw material containing a highly volatile sulfur element is used, it is possible to produce a substance containing an alkali metal element and a sulfur element with excellent homogeneity in a sealed or volatilization-prevention system.

Here, the volatilization-prevention system means a system in which highly volatile raw materials, such as the sulfur element, placed in a porous container are prevented from volatilizing out of the porous container.

Examples thereof include a system in which, in the container with an opening for placing the raw materials and the like, a lid for the container is provided so as to make an area of the opening as small as possible, so that highly volatile raw materials are prevented from volatilizing out of a container. Examples thereof also include a system in which a gas inlet-outlet with a minimum area for the inert gas to be supplied and exhausted is provided in part of the lid of the above system.

Examples thereof also include a system in which volatilization is prevented by surrounding the outside of the porous container with a non-porous casing, which is described later. The casing may be provided with minimum necessary openings, such as an inlet-outlet for gas, an inlet for raw materials and the like, and an outlet for electrolytes and the like.

The term "porous" of the porous container used in the present production method refers to a state in which the container has a large number of pores on the surface and the inside thereof that can be seen with an electron microscope. The pores penetrate the container from the inside to the outside. An open porosity of the porous container is usually 1% or more, preferably 5% or more, more preferably 10% or more, and still more preferably 15% or more. The open porosity herein means a value measured in accordance with JIS R1634:1998.

A material of the porous container is not particularly limited as long as it is a heat-resistant porous material. The porous container contains, for example, carbon, ceramic, and glass. Among these materials, it is preferable that the porous container contains carbon, from the viewpoint of low reactivity with the melt of the present raw material.

A bulk density of the carbon is preferably 1.6 g/cm³ to 2.0 g/cm³, more preferably 1.7 g/cm³ to 1.95 g/cm³, and still more preferably 1.75 g/cm³ to 1.8 g/cm³. When the bulk density of the carbon is within the above range, the melt does not leak out of the container, and stirring and melting can be performed while introducing an inert gas through the pores.

The bulk density of carbon is measured in accordance with JIS R1634:1998.

The shape and size of the porous container are not particularly limited and can be appropriately selected depending on the purpose. The porous container may be connected to the other container to form a connected container body. That is, the connected container body includes at least one porous container and is formed by connecting a plurality of containers. The number of containers in the connected container body is not particularly limited. The other container may be a porous container or a non-porous container. Among them, it is preferable to use a porous container as the other container. When the other container is a porous container, the connected container body includes a plurality of porous containers, and the above-mentioned effects of the present invention can be exhibited more efficiently.

Note that when a non-porous container is used as the other container, there are no particular limitations on functions thereof, but it is preferable that the non-porous container has a gas barrier function. Here, the term "non-porous" of the non-porous container refers to a state in which no pores can be observed on the surface or inside of the container using an electron microscope. An open porosity of the non-porous container is typically 0.1% or less.

The means for connecting the containers in the connected container body is not particularly limited, and examples of the means include bonding, screwing, and adhesion. The number of means for connecting (connecting portions) is not particularly limited.

An aspect ratio of the porous container is preferably 1 or less, more preferably 0.7 or less, and still more preferably 0.5 or less. Here, the aspect ratio of the porous container means a ratio between a height of the porous container and a length of a major axis in a two-dimensional projected image of the porous container projected from above (height of porous container/length of major axis in two-dimensional projected image of porous container projected from above). The aspect ratio can be determined by dividing the height of the porous container by the length of the major axis in the two-dimensional projected image of the porous container projected from above.

Here, the height of the porous container means the maximum height in a height direction of the porous container, and the length of the major axis means the maximum length in the two-dimensional projected image of the porous container projected from above.

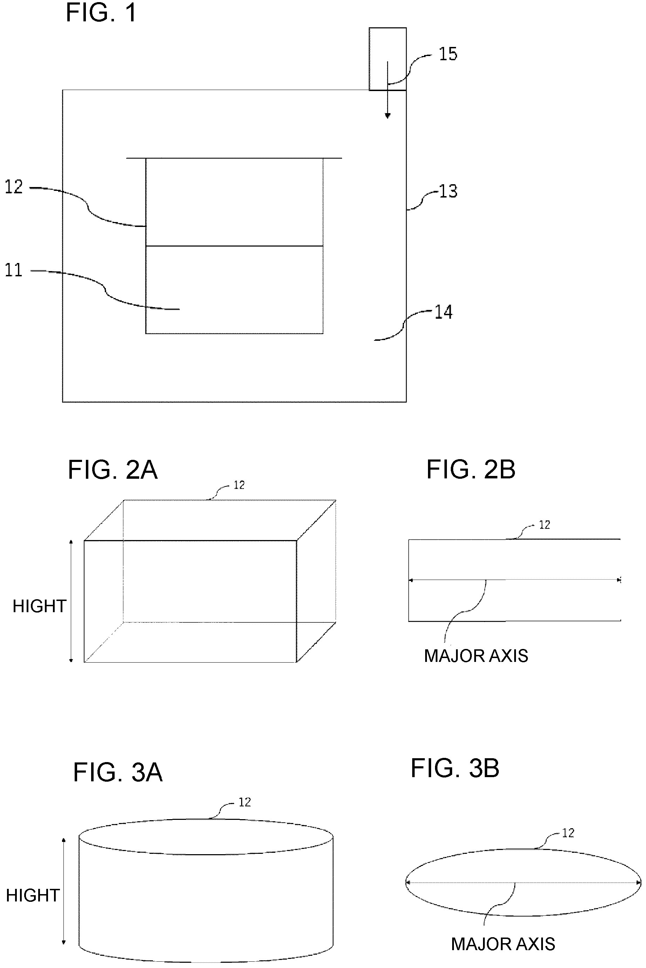

Note that when the shape of the porous container is a rectangular parallelepiped (or approximately rectangular parallelepiped), the height and the length of the major axis are as shown in FIG. 2A and FIG. 2B, respectively, and when the shape of the porous container is cylindrical (or approximately cylindrical), the height and the length of the major axis are as shown in FIG. 3A and FIG. 3B, respectively.

As described above, when the porous container is connected to the other container to form a connected container body, an aspect ratio thereof, which is a ratio between a height of the connected container body and a length of a major axis in a two-dimensional projected image of the connected container body projected from above, is preferably 1 or less, more preferably 0.5 or less, and still more preferably 0.3 or less.

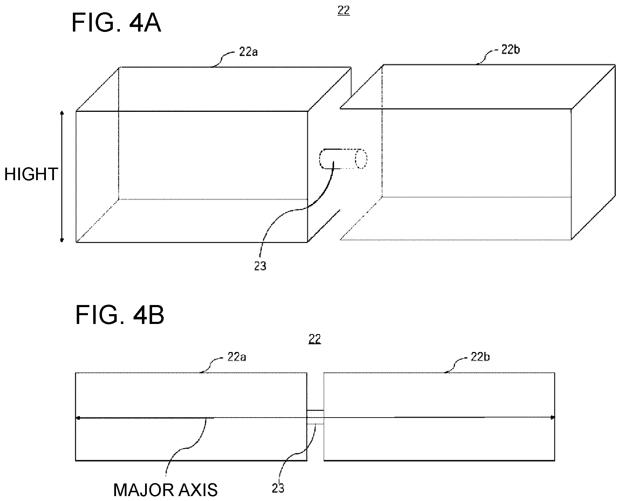

For example, as shown in FIG. 4A, when a plurality of containers (first container 22a, second container 22b) including a porous container are connected by a connecting portion 23 to form a connected container body 22, an aspect ratio of the connected container body 22 can be determined by dividing a height of the connected container body 22 shown in FIG. 4A by a length of a major axis in a two-dimensional projected image of the connected container body 22 projected from above shown in FIG. 4B.

Here, the height of the connected container body means the maximum height in a height direction of the connected container body, and the length of the major axis means the maximum length in the two-dimensional projected image of the connected container body projected from above.

The porous container preferably has a contact angle of 30° or more, which is measured by a method described in the Examples. A contact angle of 30° or more can effectively prevent the melt from leaking out from the pores of the porous container, so that it is possible to produce the present substance with excellent homogeneity.

The contact angle is more preferably 45° or more, still more preferably 60° or more, and particularly preferably 65° or more. For example, the contact angle is 150° or less.

In order to make the contact angle 30° or more, for example, a material with low wettability may be selected as the material for the porous container, or the porous container may be coated with a material with low wettability, such as a hydrophobic coating material.

It is preferable that the outside of the porous container is surrounded by a non-porous casing from the viewpoint of preventing oxygen and moisture in the atmosphere from entering the porous container. There are no particular limitations on the non-porous casing as long as it is made of a material that has a gas barrier property, and examples of the material include glass, ceramics, resin, and metal. Especially, metal is preferable from the viewpoint of durability. The casing may be provided with, for example, an inlet-outlet for gas, an inlet for raw materials and the like, and an outlet for electrolytes and the like.

### (Heating, Melting, and Stirring)

In the present production method, the present raw material is placed in the porous container and then heated and melted, thereby obtaining a melt. A method for heating and melting is not particularly limited, but examples thereof include a method in which the porous container containing the present raw material is heated by a melting furnace.

In the present production method, an inert gas is flowed to the outside of the porous container, whereby the inert gas passes through the pores of the porous container and enters the container, stirring the melt of the present raw material. In this way, by using the inert gas, the melt can be stirred without contact, so that even when the raw material contains the sulfur element, which is easy to volatilize, the volatilization of the sulfur element can be prevented during melting and stirring of the melt, and the present substance with excellent homogeneity can be obtained.

The type of the inert gas is not particularly limited as long as it does not react with the melt of the present raw material, and examples of the inert gas include nitrogen gas, argon gas, and helium gas. Among these gases, nitrogen gas is preferred from the viewpoint of procurement costs.

An oxygen concentration of the inert gas is preferably 1,000 ppm by volume or less, and more preferably 100 ppm by volume or less.

The method for heating, melting and stirring the present raw material is specifically described below with reference to FIG. 1. FIG. 1 shows an embodiment in which a porous container 12 storing a raw material 11 containing an alkali metal element and a sulfur element is placed in a melting furnace 13, and the porous container 12 is heated to obtain a melt of the raw material 11, and the melt in the porous container 12 is stirred by an inert gas 15 flowed into a space 14 (the outside of the porous container 12) defined by the porous container 12 and the melting furnace 13.

First, the porous container 12 in which the raw material 11 is placed is provided in the melting furnace 13. The melting furnace 13 is equipped with, for example, a heater (not shown). The porous container 12 is heated in the melting furnace 13 to obtain the melt of the raw material 11.

The heating and melting may be performed in an atmosphere of a gas containing the sulfur element. The present raw material is heated and melted in the atmosphere of a gas containing the sulfur element, whereby sulfur is introduced into the melt of the present raw material. In this way, a sufficient amount of sulfur for obtaining a desired composition of the present substance can be introduced. The gas containing the sulfur element is, for example, a gas containing a compound containing the sulfur element or elemental sulfur, such as a sulfur gas, hydrogen sulfide gas, and carbon disulfide gas.

The gas containing the sulfur element may be obtained by heating a sulfur source. In this case, the sulfur source is not particularly limited as long as it is elemental sulfur or a sulfur compound from which the gas containing the sulfur element can be obtained by heating, and examples thereof include elemental sulfur, organic sulfur compounds such as hydrogen sulfide and carbon disulfide, iron sulfides (such as FeS, Fe₂S₃, FeS₂, and Fe1-xS), bismuth sulfide (Bi₂S₃), copper sulfides (such as CuS, Cu₂S, and Cu1-xS), polysulfides such as lithium polysulfide and sodium polysulfide, polysulfides, and rubber subjected to a sulfur vulcanization treatment.

For example, these sulfur sources are heated in a sulfur source heating portion that is separately provided to generate the gas containing the sulfur element, and the gas is transported to a melting furnace using an inert gas such as a N₂ gas, an argon gas, and a helium gas as a carrier gas to obtain the gas atmosphere containing the sulfur element. By separating the sulfur source heating portion from the portion where heating and melting is performed, even if the gas introduced into the melting furnace contains oxygen or moisture, the oxygen and moisture can be removed by reacting with the sulfur gas before being introduced. In this way, a high-quality, high-purity sulfide-based solid electrolyte with few impurities can be preferably obtained.

In the present production method, the inert gas 15 is flowed to the outside of the porous container 12, that is, into the space 14 defined by the melting furnace 13 and the porous container. By flowing the inert gas 15 to the outside of the porous container 12, the inert gas 15 passes through the pores of the porous container and flows inside the porous container 12. The inert gas 15 flowing inside the porous container 12 promotes the flow of the melt inside the porous container 12 and stirs the melt.

A timing of flowing the inert gas 15 into the space 14 is not particularly limited, and the flowing of the inert gas 15 into the space 14 may be started before the start of heating and melting of the present raw material, or may be started during a middle stage of the heating and melting of the present raw material, or may be started after the heating and melting of the present raw material. The timing for starting the flowing of the inert gas 15 is not particularly limited, but it is preferable to start the flowing of the inert gas 15 into the space 14 before the start of heating and melting of the present raw material, from the viewpoint of promoting stirring from an initial stage of melting of the raw material and shortening the melting time.

A temperature for heating and melting is not particularly limited, but from the viewpoint of homogenizing the melt in a short time, the temperature is preferably 600°C or higher, more preferably 630°C or higher, and still more preferably 650°C or higher. The temperature for heating and melting is preferably 1,000°C or lower, more preferably 950°C or lower, and still more preferably 900°C or lower, from the viewpoint of preventing deterioration and decomposition due to heating of the components in the melt.

A time for heating and melting is not particularly limited, but from the viewpoint of homogenization, the time is preferably 0.1 hours or more, more preferably 0.5 hours or more, still more preferably 0.7 hours or more, and even more preferably 1 hour or more. As long as deterioration and decomposition of the components in the melt due to heat is tolerable, the time for heating and melting may be long. As a practical range, 100 hours or less is preferable, 50 hours or less is more preferable, and 24 hours or less is still more preferable.

A pressure during the heating and melting is not particularly limited, but for example, a normal pressure or a slight pressure is preferred, and normal pressure is more preferred.

A rate at which the inert gas 15 is flowed into the space 14 (the outside of the porous container 12) is not particularly limited, but is usually 20 L/min to 2,000 L/min, and preferably 50 L/min to 1,000 L/min.

A dew point of the space 14 (the outside of the porous container 12) during stirring is preferably 0°C to -75°C, and more preferably -25°C to -70°C. By having the dew point in the above range, it is possible to prevent deterioration of the electrolyte due to moisture.

A temperature of the space 14 (the outside of the porous container 12) during stirring is preferably 300°C to 1,000°C, and more preferably 500°C to 950°C. When the temperature is within the above range, the melt can be melted in a short period of time.

A time for flowing the inert gas 15 into the space 14 (the outside of the porous container 12) is not particularly limited, but is usually 0.1 hour to 24 hours, preferably 0.3 hours to 10 hours, and more preferably 0.5 hours to 5 hours. By having the time for flowing the inert gas 15 within the above range, homogeneous stirring can be achieved.

An oxygen concentration in the space 14 (the outside of the porous container 12) is not particularly limited, but is preferably 1,000 ppm by volume or less. By having the oxygen concentration within the above range, oxygen diffuses in the porous container, making it possible to prevent oxidation of sulfides.

An inert gas replacement rate in the space 14 (the outside of the porous container 12) is preferably 1/100 min⁻¹ to 100 min⁻¹, and more preferably 1/50 min⁻¹ to 50 min⁻¹. When the inert gas replacement rate is 1/100 min⁻¹ or more, the flow rate of the inert gas flowing into the porous container is large, which is advantageous for stirring the melt. When the inert gas replacement rate is 100 min⁻¹ or less, damage to the apparatus caused by high internal pressure can be prevented.

A dew point of a space inside the porous container 12 (a space excluding the raw material) is not particularly limited, but is preferably -25°C to -75°C, and more preferably - 35°C to -65°C. By having the dew point in the above range, deterioration of sulfides due to moisture can be prevented.

An oxygen concentration in the space inside the porous container 12 (the space excluding the raw material) is not particularly limited, but is preferably 1,000 ppm by volume or less. By having the oxygen concentration within the above range, oxidation of sulfides can be prevented.

The flow rate of the inert gas 15 flowing into the porous container 12 is not particularly limited, but is usually 0.1 L/min to 100 L/min, preferably 0.1 L/min to 50 L/min, and more preferably 0.5 L/min to 30 L/min.

In addition to the above pores, the porous container 12 may have an inlet-outlet through which the inert gas flows in or out. Such an inlet-outlet is separated from the pores in the porous container. By flowing in or out of the inert gas through the inlet-outlet, the space inside the porous container 12 can be replaced with the inert gas.

When a lid is provided on the opening on the top of the container, the inlet-outlet may be provided in the lid. The inlet-outlet may be provided on a side surface of the container.

When the porous container 12 has the above-mentioned inlet-outlet, the dew point of the space inside the porous container 12 (the space excluding the raw material) is preferably - 25°C to -75°C, more preferably -30°C to -70°C, and still more preferably -35°C to -65°C.

When the porous container 12 has the above-mentioned inlet-outlet, the oxygen concentration in the space inside the porous container 12 (the space excluding the raw material) is preferably 1,000 volume ppm or less, more preferably 500 volume ppm or less, and still more preferably 200 volume ppm or less.

When the porous container 12 has the above-mentioned inlet-outlet, the flow rate of the inert gas 15 flowing into the porous container 12 is preferably 0.1 L/min to 100 L/min, more preferably 0.1 L/min to 50 L/min, and still more preferably 0.5 L/min to 30 L/min.

The heating, melting and stirring may be performed as a continuous process. A continuous process means that the melt of the present raw material is allowed to flow continuously down from the porous container 12. The raw materials may be placed either continuously or intermittently. When the heating and melting is performed as a continuous process, the melt may be maintained in a molten state for a long period of time under appropriate conditions taking into consideration the deterioration of the components in the melt. The long period of time may be, for example, about 24 hours.

### (Cooling)

The present production method preferably further includes a step of cooling the melt obtained by heating and melting to obtain a solid. The cooling may be performed by a known method, and the method is not particularly limited.

A cooling rate is preferably 0.01°C/sec or more, more preferably 0.05°C/sec or more, and still more preferably 0.1°C/sec or more, from the viewpoint of maintaining the composition obtained by the heating and melting. An upper limit value of the cooling rate is not particularly determined, and a cooling rate of a twin roller, whose rapid cooling rate is generally said to be the highest, is 1,000,000°C/sec or less.

Here, for example, in the case where the obtained solid is desired to be an amorphous sulfide-based solid electrolyte, it is preferable to obtain a solid by rapidly cooling the melt obtained by heating and melting. Specifically, the cooling rate in the case of rapid cooling is preferably 10°C/sec or more, more preferably 100°C/sec or more, still more preferably 500°C/sec or more, and particularly preferably 700°C/sec or more. An upper limit value of the cooling rate is not particularly limited, and a cooling rate of a twin roller, whose rapid cooling rate is generally said to be the highest, is 1,000,000°C/sec or less.

On the other hand, it is also possible to obtain a sulfide-based solid electrolyte having a specific crystal structure by performing a slow cooling in the cooling step to crystallize at least a part of the solid or a sulfide-based solid electrolyte constituted by a crystal phase and an amorphous phase. The cooling rate in the case of the slow cooling is preferably 0.01°C/sec or more, and more preferably 0.05°C/sec or more. The cooling rate is preferably 500°C/sec or less, and more preferably 450°C/sec or less. The cooling rate may be 10°C/sec or less, or may be 5°C/sec or less. Note that the cooling rate may be appropriately adjusted according to crystallization conditions.

Here, crystals contained in the sulfide-based solid electrolyte are preferably ion-conductive crystals. Specifically, the ion-conductive crystals are crystals having a lithium-ion conductivity of more than 10⁻⁴ S/cm, and more preferably more than 10⁻³ S/cm.

When it is desired that the solid obtained after cooling is a sulfide-based solid electrolyte containing a crystal phase, it is preferable that the melt obtained in the heating and melting step contains a compound that serves as a crystal nucleus. In this way, it is easier for crystals to precipitate in the cooling step. A method for containing a compound that serves as a crystal nucleus in the melt is not particularly limited, but examples thereof include a method of adding a compound that serves as a crystal nucleus to the raw material or an intermediate, and a method of adding a compound that serves as a crystal nucleus to the melt during heating and melting.

Examples of the compound that serves as a crystal nucleus include oxides, oxynitrides, nitrides, carbides, other chalcogen compounds, and halides. The compound that serves as a crystal nucleus is preferably a compound having a certain degree of compatibility with the melt. Note that a compound that is completely incompatible with the melt cannot serve as a crystal nucleus.

When it is desired that the solid obtained after cooling is a sulfide-based solid electrolyte containing a crystal phase, a content of the compound that serves as a crystal nucleus in the melt is preferably 0.01 mass% or more, more preferably 0.1 mass% or more, and still more preferably 1 mass% or more. On the other hand, from the viewpoint of preventing a decrease in the lithium-ion conductivity, the content of the compound that serves as a crystal nucleus in the melt is preferably 20 mass% or less, and more preferably 10 mass% or less.

If it is desired that the solid obtained after cooling is an amorphous sulfide-based solid electrolyte, it is preferable that the melt does not contain any compound that serves as a crystal nucleus, or that a content of such compound is a predetermined amount or less. Specifically, the content of the compound that serves as a crystal nucleus in the melt is preferably 1 mass% or less, and more preferably 0.1 mass% or less. The content of the compound that serves as a crystal nucleus in the melt may be 0.01 mass% or less.

### (Re-heating)

High-temperature crystallization of an amorphous sulfide-based solid electrolyte or a sulfide-based solid electrolyte containing an amorphous phase can be promoted by a heating treatment (post-annealing). When the solid obtained in the cooling step is an amorphous sulfide-based solid electrolyte or a sulfide-based solid electrolyte containing an amorphous phase, the present production method may further include re-heating the solid. By re-heating a sulfide-based solid electrolyte containing sulfide-based solid electrolyte crystals, ions in the crystal structure can be re-arranged, thereby increasing the lithium-ion conductivity.

Note that the re-heating treatment refers to at least one of heating the solid obtained by cooling for crystallization and re-arranging ions in the crystal structure. Here, the heat treatment of these amorphous sulfide-based solid electrolytes or sulfide-based solid electrolytes containing an amorphous phase, including the crystallization treatment, is referred to as the re-heating treatment.

### EXAMPLES

Hereinafter, the present invention is described with reference to Examples and Comparative Examples, but the present invention is not limited to the following examples. Examples 1 to 3 are working examples of the present invention, and Examples 4 and 5 are comparative examples.

### [Example 1]

Raw material powders of Li₂S (purity 99.98%, manufactured by Sigma) and P₂S₅ (purity 99%, manufactured by Sigma) were mixed in a molar ratio of 50:50. In a carbon porous container (open porosity 16%, bulk density 1.78 g/cm³), 100 g of the raw material powder was placed, and the porous container was placed in a melting furnace. The carbon porous container was covered with a lid, and N₂ gas was circulated at 0.1 L/min for 0.25 hours through the inlet-outlet provided in the lid for introducing the inert gas, and discharged, thereby replacing the space inside the porous container with N₂ gas. The oxygen concentration in the space inside the porous container was 1,000 ppm by volume or less.

Next, N₂ gas was flowed at 25 L/min to the outside of the porous container, which is the space defined by the melting furnace and the porous container, so as to create an atmosphere with an oxygen concentration of 1,000 ppm by volume or less and a dew point of -70°C or less, and the raw material in the porous container was melted by being held for 0.5 hours under conditions of a pressure of 1 atm and a temperature of 750°C (a heating rate of 10°C/min).

Thereafter, the melt was extracted from a bottom of the porous container and cooled on a water cooling plate at a cooling rate of 50°C/sec to obtain a glass-state sulfide compound.

### [Example 2]

A glass-state sulfide compound of Example 2 was produced in the same manner as in Example 1, except that the rate of the N₂ gas flowed to the outside of the porous container, which is the space defined by the melting furnace and the porous container, was set to 70 L/min.

### [Example 3]

A glass-state sulfide compound of Example 3 was produced in the same manner as in Example 2, except that raw material powders of Li₂S (purity 99.98%, manufactured by Sigma), P₂S₅ (purity 99%, manufactured by Sigma), and LiI (purity 99.9%, manufactured by Sigma) were mixed in a molar ratio of 40:30:30 as the material, and the temperature of the outside of the porous container, which is the space defined by the melting furnace and the porous container, was set to 650°C (heating rate: 10°C/min).

### [Example 4]

A glass-state sulfide compound of Example 4 was produced in the same manner as in Example 1, except that the porous container was replaced with a non-porous container (bulk density 1.54 g/cm³) made of glassy carbon (open porosity < 1%), and the N₂ gas was flowed at 25 L/min into the space defined by the melting furnace and the container, so as to create an atmosphere with a dew point of -70°C or less.

### [Example 5]

A glass-state sulfide compound of Example 5 was produced in the same manner as in Example 1, except that the N₂ gas was not flowed to the outside of the porous container, which is the space defined by the melting furnace and the porous container, but was circulated at 25 L/min through the lid of the carbon porous container so as to create an atmosphere with a dew point of -70°C.

### (Wettability Evaluation)

On a plate made of the material of each porous container, 30 mg of the obtained sulfide compound was placed, and then melted to examine a contact angle thereof. Specifically, a liquid droplet obtained by melting at 750°C for 5 minutes and allowed to cool was photographed from a lateral side using a camera to obtain the contact angle between the droplet and the plate. Results are shown in Table 1.

### (Homogeneity Evaluation)

As samples for composition analysis, 30 g of the melt first flow out from the bottom of the porous container onto the water cooling plate (Sample 1), 30 g of the next flowing out melt (Sample 2), and 30 g of the last flowing out melt (Sample 3) were collected and these Samples 1 to 3 were subjected to composition analysis, and homogeneity evaluation was performed.

The composition analysis was performed by crushing the obtained electrolyte, dissolving the powder in an alkaline aqueous solution, and measuring P and S by ICP emission spectrometry, Li by atomic absorption spectrometry, and I by ion chromatography.

Average values of Samples 1 to 3 were evaluated as follows according to a difference ( variation) between the maximum and minimum values of the S component (wt%). Results are shown in Table 1.
A: Variation is 0.5 wt% or less
B: Variation is more than 0.5 wt% and 3 wt% or less
C: Variation exceeds 3 wt%

**[Table 1]**

| | Raw material | Porous container | | Melting and stirring | | | Cooling | | Wettability evaluation | Homogeneity evaluation |
|---|---|---|---|---|---|---|---|---|---|---|
| | | | | Dew point | Tempera ture | Flow rate of nitrogen gas | Cooling method | Cooling rate | | |
| | | Material | Open porosity | | | | | | | |
| | (Molar ratio) | - | (%) | (°C) | (°C) | (L/min) | - | (°C/sec) | | |
| Example 1 | Li₂S:P₂S₅ = 50:50 | Carbon | 16 | -70 | 750 | 25 | Water cooling plate | 50 | > 60° | B |
| Example 2 | Li₂S:P₂S₅ = 50:50 | Carbon | 16 | -70 | 750 | 70 | Water cooling plate | 50 | > 60° | A |
| Example 3 | Li₂S:P₂S₅:LiI = 40:30:30 | Carbon | 16 | -70 | 650 | 70 | Water cooling plate | 50 | > 60° | A |
| Example 4 | Li₂S:P₂S₅ = 50:50 | Glassy carbon | < 1 | -70 | 750 | 25 | Water cooling plate | 50 | > 60° | C |
| Example 5 | Li₂S:P₂S₅ = 50:50 | Carbon | 16 | -70 | 750 | - | Water cooling plate | 50 | > 60° | C |

In Examples 1 to 3, which are working examples, the inert gas was flowed to the outside of the porous container and the melt was stirred, so that a sulfide compound with high homogeneity was obtained.

On the other hand, in Example 4, which is a comparative example, a dense container, which is not porous, was used, and therefore stirring of the melt by the inflow of the inert gas from the outside did not occur, resulting in the production of a sulfide compound having an uneven composition.

In Example 5, which is a comparative example, since the inert gas was not flowed to the outside of the porous container, the melt was not stirred, and as a result, a sulfide compound having an uneven composition was obtained. In addition, the flow rate of the N₂ gas flowing into the container was increased to maintain the dew point, resulting in an uneven composition.

Although various embodiments have been described above with reference to the drawings, it is needless to say that the present invention is not limited to such examples. It is obvious for a person skilled in the art that various modifications and variations can be made within the category described in the scope of claims and it is understood that such modifications and variations naturally belong to the technical scope of the present invention. The constituent elements described in the above embodiments may be combined in any manner without departing from the spirit of the invention.

The present application is based on a Japanese patent application (No. 2022-015190) filed on February 2, 2022, contents of which are incorporated herein by reference.

### REFERENCE SIGNS LIST

11 raw material
12 porous container
13 melting furnace
14 space
15 inert gas
22 connected container body
22a first container
22b second container
23 connecting portion

## Claims

1. A method for producing a substance comprising an alkali metal element and a sulfur element, wherein a raw material comprising the alkali metal element and the sulfur element is placed in a porous container and heated and melted to obtain a melt, and the melt is stirred by an inert gas flowed to an outside of the porous container.

2. The method according to claim 1, wherein the alkali metal element is a lithium element, and the substance comprising the alkali metal element and the sulfur element is a sulfide-based solid electrolyte comprising the lithium element.

3. The method according to claim 1 or 2, wherein the raw material further comprises a phosphorus element.

4. The method according to any one of claims 1 to 3, wherein a contact angle between the porous container and the melt is 30° or more.

5. The method according to any one of claims 1 to 4, wherein the porous container has an open porosity of 5% or more.

6. The method according to any one of claims 1 to 5, wherein the porous container comprises carbon.

7. The method according to claim 6, wherein the carbon has a bulk density of 1.6 g/cm³ to 2.0 g/cm³.

8. The method according to any one of claims 1 to 7, wherein an aspect ratio, which is a ratio between a height of the porous container and a length of a major axis in a two-dimensional projected image of the porous container projected from above, is 1 or less.

9. The method according to any one of claims 1 to 8, wherein the porous container is connected to another container to form a connected container body, and an aspect ratio, which is a ratio between a height of the connected container body and a length of a major axis in a two-dimensional projected image of the connected container body projected from above, is 1 or less.

10. The method according to any one of claims 1 to 9, wherein the outside of the porous container is surrounded by a non-porous casing.
